(19) Europäisches Patentamt
European Patent Office
Office européen des brevets

(11) Publication number: **0 134 359**
**B1**

(12) **EUROPEAN PATENT SPECIFICATION**

(45) Date of publication of patent specification: **08.04.87**

(51) Int. Cl.[4]: **B 01 D 53/34**

(21) Application number: **83305231.9**

(22) Date of filing: **08.09.83**

(54) **Process for the reduction of the content of SO2 and/or NOx in flue gas.**

(43) Date of publication of application:
**20.03.85 Bulletin 85/12**

(45) Publication of the grant of the patent:
**08.04.87 Bulletin 87/15**

(84) Designated Contracting States:
**AT BE CH DE FR GB IT LI LU NL SE**

(56) References cited:
**DE-A-2 756 186**
**US-A-4 097 349**
**US-A-4 162 207**

(73) Proprietor: **CONCORD SCIENTIFIC CORPORATION**
**2 Tippett Road**
**Downsview Ontario M3H 2V2 (CA)**

(72) Inventor: **Stevens, R. D. Samuel**
**2 Tippett Road**
**Downsview Ontario, M3H 2V2 (CA)**

(74) Representative: **Day, Jeremy John et al**
**REDDIE & GROSE 16 Theobalds Road**
**London, WC1X 8PL (GB)**

**EP 0 134 359 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to a process for the reduction of the content of $SO_2$ and/or the nitrogen oxides NO and $NO_2$ (referred to herein by the general term "$NO_x$") in flue gases.

It has been proposed to remove $NO_x$ from flue gases by mixing the gas with $NH_3$ and irradiating the mixture with ultraviolet light.

By this process, the $NH_3$ is photolysed to yield amino radical ($NH_2$) in accordance with the equation

$$NH_3 \rightarrow NH_2 + H \qquad (1)$$

The amino radical reacts with $NO_x$ to yield the inert gas nitrogen, water and $N_2O$ which is widely regarded as being inert and harmless in the atmosphere, in accordance with the equations

$$NH_2 + NO \rightarrow N_2 + H_2O \qquad (2)$$

$$NH_2 + NO_2 \rightarrow N_2O + H_2O \qquad (3)$$

It has now been found that increased efficiency of the utilization of the ultraviolet light can be obtained when ultraviolet light of a wavelength falling within a selected range is employed. More specifically, the present invention provides, in one aspect, a process for reduction of the content of NO and $NO_2$ in flue gas containing also substantial quantities of $H_2O$ vapor comprising mixing the flue gas with $NH_3$ and irradiating the mixture with ultraviolet radiation containing at least one component of wavelength in the range about 190 to about 220 nm, said radiation being substantially wholly free of any component of wavelength below about 190 nm, and said process taking place in the absence of a solid state catalyst.

It will be appreciated that the efficiency of the utilization of the ultraviolet radiation is of economic significance. The process is of course usually to be applied to a flowing stream of the gas and if the irradiation is conducted with low efficiency, a prolonged exposure to the radiation is required. This would require a bank of ultraviolet lamps of greatly extended length for irradiation of a prolonged section of the duct conveying the flue gas. The result would be that not only would there be an increase in the operating costs of supplying the energy required to energize the ultraviolet lamps, but also the capital cost of supplying and installing the irradiation apparatus would be considerably increased.

When employing wavelengths in the range about 190 to about 220 nm, the main $NO_x$-removing reactions that occur are the above reactions (1), (2), and (3), resulting in the formation of $N_2O$, $H_2O$, and $N_2$ in the waste gas stream. It is considered that these products can be safely passed to the atmosphere. By employing radiation free from any component below about 190 nm undesirable side reactions are avoided. With radiation below 190 nm there is considerable formation of OH radical due to photolysis of water vapor which is usually present as a matter of course in flue gas streams. Due to the high concentrations of water vapor normally present, the predominating reaction is therefore:

$$H_2O \rightarrow OH + H \qquad (4)$$

The OH radical reacts with $NO_2$ to yield acidic species

$$OH + NO_2 \rightarrow HNO_3 \qquad (5)$$

Normally, it would be desirable to remove these acidic species by absorption in the presence of moisture, e.g. water vapor, by an alkaline-reacting medium, e.g. by reaction with an excess of ammonia gas to yield nitrate salts $NH_4NO_3$. The nitrate salts may form a particulate second phase and normally it is desirable to remove the particulate salts from the gas stream before passing it to the atmosphere. In this case, particulate salts are obtained as a by-product. The particulate salts may be recovered and may have a value e.g. as fertilizer. $NH_4NO_3$ is, however, explosive and presents handling difficulties. By employing a radiation source substantially wholly free of any component below 190 nm, the formation of an explosive precipitate of $NH_4NO_3$ is much reduced or is substantially wholly avoided.

When the wavelength of the ultraviolet radiation employed in the irradiation step is in the range about 190 to about 220 nm, the $NH_3$ gas present in the mixture absorbs the radiation strongly, and a satisfactory removal of $NO_x$ is achieved as there is little interference from undesired side reactions. Above about 220 nm the efficiency of the process is impaired as the degree to which $NH_3$ absorbs radiation drops off sharply with wavelengths higher than about 220 nm and therefore only negligibly small concentrations of amino radical are generated, so that if the wavelength of the radiation is increased much above 220 nm the concentrations of ammonia that need to be employed, and the intensity of the radiation that is required, in order to achieve removal or $NO_x$ within reasonable times, rapidly becomes impracticably large.

The absorption of the radiation by $NH_3$ peaks at about 195 nm and drops off, as indicated in Table 1 toward wavelengths below about 170 nm. At the same time, however, as indicated in Table 1, the radiation is quite strongly absorbed by the $O_2$ and $H_2O$ which are usually present as a matter of course.

TABLE 1
Extinction coefficients (1 $mol^{-1}$ $cm^{-1}$)

| Reaction | Wavelength (nm) | | |
|---|---|---|---|
| | 184.9 | 193 | 213.9 |
| $NH_3 + hv \rightarrow NH_2 + H$ | 1000 | 1500 | 100 |
| $O_2 + hv \rightarrow 2O\ (^3P)$ | 4.2 | 0.3 | 0.002 |
| $H_2O + hv \rightarrow OH + H$ | 14 | 0 | 0 |

The extinction coefficient ε is defined by

$$I = I_o\ 10^{-\varepsilon cl}$$

where $I_o$ = light intensity incident on a cell containing the photolysable species
I = Intensity emerging from the cell
c = concentration of the photolysable species (mol $dm^{-3}$)
l = cell length (cm)
and ε = extinction coefficient (1 $mol^{-1}$ $cm^{-1}$)

The extinction coefficient therefore indicates how strongly the photolysable species absorbs the radiation, the higher the coefficient, the greater the degree of absorption.

It will be noted that above about 190 nm, the extinction coefficient of water vapor is zero and therefore substantially no OH radical is formed, so that reaction (5) does not occur to any significant extent.

Although the coefficients of $O_2$ and $H_2O$ are substantially lower than that of $NH_3$ in the range 170 to 220 nm, as may be perceived by the above Table, such coefficients increase sharply toward the lower end of this range and, moreover the concentrations of $O_2$ and $H_2O$ present in the reaction mixture are normally considerably higher than the concentration of $NH_3$. Desirably, in the process of the present invention the concentration of $NH_3$ present in the mixture that undergoes photolysis is in the range from about $5 \times 10^{-6}$ to about $5 \times 10^{-3}$ mol/l. With concentrations of $NH_3$ below about $5 \times 10^{-6}$ mol/l, the efficiency of the removal of $NO_x$ tends to be impaired and undesirably prolonged exposure to the ultraviolet radiation is required to achieve satisfactory degrees of removal of the undesired $NO_x$ material. Concentrations of $NH_3$ above about $5 \times 10^{-3}$ mol/l appear to be unnecessary and are undesirable as not only does the maintenance of high $NH_3$ concentrations in the photolysis reaction zone greatly increase the consumption of $NH_3$ and hence also the operating costs of the process, but also this may result in emission of substantial quantities of unconsumed $NH_3$ to the atmosphere. More preferably, the said concentration of $NH_3$ is in the range of about $1 \times 10^{-5}$ to about $1 \times 10^{-3}$ mol/l, still more preferably about $1 \times 10^{-5}$ to about $2 \times 10^{-5}$ mol/l.

The quantities of $O_2$ (moles) present in flue gases due to incomplete consumption of $O_2$ in the combustion air will however typically be about 100 times the molar concentrations of $NH_3$ which it is desired to maintain in the reaction mixture, and the quantities of $H_2O$ vapor present as a product of combustion will typically be of the order of about 200 times the said $NH_3$ molar concentrations. Therefore, at wavelengths much below about 190 nm, absorptions by $O_2$ and $H_2O$ compete significantly with the absorption by $NH_3$ as the concentration of $O_2$ and $H_2O$ is much higher than that of $NH_3$ and the extinction coefficients of $O_2$ and $H_2O$ increase rapidly while the extinction coefficient of $NH_3$ drops rapidly below about 190 nm, and therefore below 190 nm the formation of $NH_2$ radicals is greatly reduced.

As a result, when the ultraviolet radiation includes components with a wavelength below about 190 nm the efficiency of the utilization of the radiation energy is much reduced as a large proportion of the radiation energy is directed to the production of incompetent species.

There is some tendency during the present reaction for combination of $NH_2$ radicals to occur, yielding hydrazine which is poisonous.

$$NH_2 + NH_2 \rightarrow N_2H_4$$

It is of course desirable to maintain the concentration of hydrazine in the reaction mixture leaving the photolysis reaction zone as low as possible, as it may otherwise be necessary to take special steps to absorb hydrazine from the reaction mixture.

Hydrazine is a strong absorber of radiation in the wavelength range about 180 to about 270 nm, and dissociates to reform the amino radical

$$N_2H_4 + h \rightarrow 2NH_2$$

By employing a source of ultraviolet light including one or more components in the wavelength range 190 to 220 nm, the content of hydrazine in the reaction mixture can be kept to acceptably low levels by its re-conversion to free radicals.

In a further aspect, the present invention provides a process for reacting a flue gas containing at least about 1 × $10^{-6}$ mol/l $SO_2$ to convert said $SO_2$ to an oxidized acidic species, in the absence of a solid state catalyst, said gas containing also substantial quantities of $H_2O$ vapor and $O_2$, comprising irradiating the gas with ultraviolet radiation containing at least a component of wavelength below about 190 nm.

Preferably, the radiation contains a component in the range about 170 to about 190 nm. As noted above, photolysis of the water vapor with radiation below 190 nm, preferably in the range 170 to 190 nm, efficiently results in the formation of large quantities of OH radical through reaction (5).

The hydroxyl radical reacts with $SO_2$ to yield oxidized acidic species.

$$OH + SO_2 \rightarrow HSO_3 \quad (6)$$

These acidic species can be removed by absorption in the presence of moisture e.g. by water or by an alkaline-reacting medium e.g. by reaction with ammonia gas to yield sulfate salts, or may be absorbed by conventional means such as scrubbers or employed as a feed material to a sulfuric acid manufacturing process.

Frequently, flue gases to be treated will contain both $NO_x$ and $SO_2$. In such cases it may be desirable to subject the gas firstly to an $NO_x$-removing procedure before subjecting it to the $SO_2$ oxidation reaction described above, to avoid undesired formation of $NHO_3$ acidic species in the latter reaction. In accordance with a further aspect, the invention therefore provides a process for the reduction of the content of $NO_x$ and $SO_2$ in flue gas containing also substantial quantities of $H_2O$ vapor and $O_2$ comprising mixing the flue gas with $NH_3$ and irradiating the mixture with ultraviolet radiation containing at least one component of wavelength in the range about 190 to about 220 nm, said radiation being substantially wholly free of any component with a wavelength below about 190 nm, to obtain a gas with a reduced content of $NO_x$ and irradiating the gas having a reduced content of $NO_x$ with ultraviolet radiation containing at least a component of wavelength below about 190 nm, to convert $SO_2$ to oxidized acidic species, the process taking place in the absence of a solid state catalyst.

An advantage of the present process is that as the $NO_x$ removal reaction takes place in the absence of a solid state catalyst, there is no need to remove $SO_2$ and other compounds of sulfur, which are catalyst poisons, from the flue gas prior to carrying out the reaction.

The form of ultraviolet lamp to be employed will depend on the desired wavelength range. As noted above, in one form, the lamp may preferably be one which includes at least one component in the range about 170 to 190 nm. One class of lamps which may be employed comprises low pressure mercury arc lamps. These provide a strong emission line at 184.9 nm, along with a strong emission line at 253.7 nm, and weaker emissions at other wavelengths. These lamps may therefore be employed for the $SO_2$ oxidation process described above. A further class of lamps which may be employed consists of high pressure mercury-xenon lamps. These provide an output which is a continuous spectrum from 190 nm to above 300 nm. They provide some emission at wavelengths lower than 190 nm, but this may be readily screened out with an appropriate filter. These lamps are therefore particularly useful for photolytic removal of $NO_x$ from flue gas streams by irradiation of an $NH_3$-containing reaction mixture at 190 to 220 nm, even though a substantial proportion of their output is not employed efficiently as it consists of radiation with a wavelength above 220 nm.

It may be noted that the above-mentioned low pressure mercury arc lamps and high pressure mercury xenon lamps are readily available commercially. It is one advantage of the processes of the present invention that they can be carried out employing readily commercially-available ultra violet lamps.

Some examples of processes in accordance with the present invention are illustrated in the accompanying drawings in which:

Fig. 1 shows in schematic form combustion apparatus e.g. a boiler, and associated equipment for removal of $NO_x$ and/or $SO_2$ from the flue gases emitted by the boiler;

Fig. 1a shows a modification of the apparatus of Fig. 1;

Fig. 2 is a perspective view illustrating a longitudinal section through a portion of the wall of the flue gas duct of the above apparatus; and

Fig. 3 shows a further modification of the apparatus.

Referring to the drawings, wherein like reference numerals indicate like parts, Figure 1 shows a combustion apparatus e.g. a boiler 1, which is supplied with combustion air through an inlet line 2 which passes through an air preheater 3 from which the heated air is supplied to the boiler through a line 4. Flue gases from the boiler pass direct to the preheater 3 through a duct 6.

The boiler 1 may be in general any form of combustion apparatus wherein atmospheric air is employed to sustain combustion and the fuel contains sulfur, yielding $SO_2$ in the flue gas, and/or the fuel is burnt at a temperature sufficiently high that a substantial quantity of $NO_x$ is formed. At high temperatures nitrogen, present in the combustion air and, particularly in the case of solid fuels, bound up in the fuel itself, reacts

with oxygen, present in the combustion air, to yield NO.

$$N_2 + O_2 \rightarrow 2NO$$

Some oxidation of NO to $NO_2$ also occurs, so that the flue gases containing NO mixed with some $NO_2$

$$2NO + O_2 \rightarrow 2NO_2$$

The fuel may therefore be, for example, hydrogen gas, or a primarily carbonaceous or hydrocarbon fuel, e.g. the so-called fossil fuels such as oil, coal, and natural gas, or a fuel derived from fossil fuels e.g. petroleum gas or coal gas.

Ammonia gas is injected into a duct 7 which conveys the cooled flue gas from the air preheater 3 to the usual device for separation of particulate material e.g. fly ash from the gas stream, in this example an electrostatic precipitator 8. The ammonia is injected through an inlet line 9 under the control of a valve 10 which permits addition of the ammonia at a metered rate. Frequently, the flue gas will contain quantities of $SO_3$ and HCl. These react with $NH_3$ to yield particulate ammonium salts, e.g. $NH_4HSO_4$ and $NH_4Cl$. If the ammonia is added downstream from the boiler or other combustion apparatus 1 and the air preheater 2, there is no risk of ammonium bisulfate and ammonium chloride condensing on critical components such as the boiler 1 and preheater 2 and causing corrosion and fouling. The ammonia may be added as indicated upstream from the precipitator 8 so that the bisulfate salt can be removed to avoid excessive turbidity in the gas stream and loss of efficiency in the subsequent photolysis step. The rate of addition of ammonia may be calculated so that there is sufficient to react with the $SO_3$ and HCl and leave an excess of ammonia over in the concentration required during the photolysis step i.e. generally in the above-mentioned range of about $5 \times 10^{-6}$ to about $5 \times 10^{-3}$ mol/l. Alternatively, and more desirably, the rate of addition of $NH_3$ may be controlled automatically in response to sensors located in the duct 7 and in the stack 13, the former sensors being responsive to the concentrations of $SO_2$ and/or $NO_x$ and serving to increase the rate of addition of $NH_3$ as the concentrations of $SO_2$ and/or $NO_x$ increase and the latter sensors being responsive to the presence of $NH_3$ and serving to decrease the rate of addition when the concentration of unconsumed $NH_3$ in the stack gases rise above a predetermined limit.

Ammonium bisulfate and chloride mixture collected at the precipitation may be separated from the fly ash and be recovered. If, depending on the chemical composition of the flue gas, the recovered mixture does not contain excessive quantities of heavy metals or other toxic materials, it may be utilizable as a valuable by-product.

As shown, the ammonia addition is desirably made at a point upstream from the usual induced draft fan 11 which passes the cleaned gas from the precipitator 8 along a duct 12 to the stack 13 from which the flue gases are vented to the atmosphere. Passage of the flue gas/$NH_3$ mixture through the fan 11 ensures that the $NH_3$ is mixed uniformly in the gas stream. It is an advantage of the process of the invention that the ammonia can be introduced and the photolysis conducted at a region of the flue gas ductwork adjacent the electrostatic precipitators where the flue gases are at comparatively low temperatures e.g. up to 400°C, more typically 150 to 250°C, as high temperatures are not required for the photolytic generation of the reactive $NH_2$ and OH radicals, which can proceed in the cold. These regions of the flue gas ductwork are normally readily accessible so the fitting of the inlets, lamps etc. required for carrying out the process can be readily carried out on existing combustion plant. A lamp 14 is provided adjacent the duct 12 for irradiating the gas stream passing through the duct 12. As shown in Fig. 2, the lamp may comprise a lamp body proper 16 housed within a metal reflector 17 and separated from the interior of the duct by an ultraviolet-transmissive window 18 e.g. of quartz. The window 18 may comprise a filter to screen out undesired components of the radiation. Desirably, the space within the reflector 17 and window 18 comprise a sealed unit filled with an ultraviolet inert gas e.g. nitrogen to avoid absorption losses to avoid or reduce generation of ozone in the atmosphere adjacent the lamp. It may be desirable to mount the lamp 14 external to the duct 12, as shown, because the flue gas will normally contain significant amounts of particulate matter even after passage through the precipitator 8 and there may therefore be a risk of fouling of the lamp structure. Normally, it will be desirable to equip the window 18 with automated mechanical cleaners (not shown) to remove any fouling which may build up on the face of the window adjacent the interior of the duct 12.

In order to conduct a sequential $NO_x$- and $SO_2$-removing process in which firstly an $NH_3$-containing mixture is irradiated at 190 to 220 nm to remove $NO_x$ and the photolysed reaction mixture is subsequently irradiated at 170 to 190 nm to oxidize $SO_2$ to acidic species, the lamp 14 may be constituted by two longitudinally spaced ultraviolet sources emitting radiation in the respective desired wavelengths.

As noted above, the efficiency of the removal of the $NO_x$ and/or $SO_2$ is strongly dependent on the wavelength of the ultraviolet radiation employed. It has been found, however, that the efficiency of the process when operated in the selected wavelength ranges, in terms of the rate of removal of the undesired species, is relatively insensitive to the concentrations of other species present in the reaction mixture. It is convenient to measure the effectiveness of the process in removing $NO_x$ in terms of the percentage removal of NO. Thus, for example when a reaction mixture consisting of a given flue gas composition and $NH_3$ is irradiated with ultraviolet light of wavelength 193 nm, the rate of reduction of NO content is

approximately 2.5 times the rate that is achieved when the irradiation is conducted at a wavelength of 213.9 nm. These rates are relatively unaffected by the initial concentration of NO, $SO_2$ or $NH_3$ (as long as a certain minimum concentration of $NH_3$ is present), or by variation in the concentration of any other species normally present in the reaction mixture, and given that the usual quantities of $H_2O$ vapor (normally at least about $1 \times 10^{-4}$ mol/l) are present in the flue gas.

The rate of reduction of $NO_x$ and/or $SO_2$ is also dependent on the total quantity of radiant energy to which the reaction mixture is subjected. Thus for example when the $NH_3$ and flue gas mixture is irradiated with ultraviolet light in the preferred wavelength range of 190 to 220 nm, about 80% of the $NO_x$ is removed when the mixture is irradiated continuously for 10 millisec at a light intensity of about $10^{18}$ photon/cm$^2$/sec, or is irradiated continuously for 100 millisec at an intensity of about $10^{17}$ photon/cm$^2$/sec, these light intensities being typical of those achievable with the preferred forms of ultraviolet lamps. Typically the flow rate of flue gases through the normal uniform cross-section ductwork encountered in e.g. conventional coal-fired power stations is of the order of 10 m/sec, thus requiring that the irradiated lengths of ductwork should be in the order of 20 cm in the case of the higher powered lamps or 2m in the case of the lower powered lamps. The percentage reduction of $NO_x$ that will be required in any given case will of course depend on the initial concentration of $NO_x$ present in the flue gas and the levels of $NO_x$ concentration that it is desired to achieve in stack gas passed to the atmosphere but usually percentage reductions of at least 80% in the $NO_x$ concentration will be called for. More generally, therefore it will normally be desired to subject the reaction mixture to a total quantity of radiant energy flux in range of about $10^{17}$ to about $10^{18}$ photon/cm$^2$ of the irradiated area of the flue gas duct during the photolysis reaction.

The rate of removal of $SO_2$, in the substantial absence of $NO_x$, is such that about 72% of the $SO_2$ is removed when the $SO_2$-containing gas is irradiated at 175 nm for 10 millisec at an intensity of $3 \times 10^{18}$ photon/cm$^2$/sec.

The embodiment illustrated in Fig. 1 is particularly well suited for use when either it is desired to control only emission of $NO_x$, and the irradiation is conducted at a wavelength of 190 to 220 nm so that the gaseous photolysis products $N_2$ and $N_2O$ may be vented through the stack 13, or when the object is to control emissions of solely $SO_2$ or both $SO_2$ and $NO_x$ and the irradiation is conducted at a wavelength of 170 to 190 nm and it is acceptable to vent particulate photolysis products e.g. $(NH_4)_2SO_4$ and $NH_4NO_3$ to the atmosphere.

In the embodiment of Fig. 1A, after irradiation at a dual lamp arrangement 14 providing firstly reaction of $NO_x$ with photolytically-generated $NH_2$ radical and secondly oxidation of $SO_2$ to $HSO_3$ species by irradiation with ultraviolet light in the wavelength range 170 to 190 nm, the $HSO_3$ species are subsequently neutralized to form particulate $(NH_4)_2SO_4$ through reaction with an excess of ammonia in the presence of moisture. The reaction mixture is passed through a second solids separator device e.g. a second electrostatic precipitator 19 wherein the particulate products are removed. Depending on the chemical composition of flue gases, and particularly if the flue gases are free from toxic heavy metal materials, the separated-out sulfate salts may be recovered e.g. for use as agricultural fertilizer. Instead of supplying an excess of ammonia to the flue gas before the irradiation step it will normally be more efficient to supply the additional ammonia required for neutralization of the acidic bodies through an auxiliary ammonia inlet subsequent to the lamp 14 and as indicated in broken lines at 21, under the control of the sensors in the stack 13 which control the emission of unreacted ammonia to the atmosphere.

In Figure 3, a preferred arrangement for $NO_x$ or $NO_x$ and $SO_2$ removal is shown wherein the ammonia is added through line 9 after the flue gas has passed through the precipitator 8. In many cases, the flue gases emitted by the boiler 7 will contain HCl and $SO_3$. These will react with $NH_3$ to form particulate ammonium salts. Addition of the ammonia subsequent to the precipitator 8 avoids recovery of these soluble salts with the fly ash from the precipitator 8. In many cases, it is desired to recover a fly ash which is relatively free from solubles, as these may render the fly ash unsuitable for some purposes such as for land fill where the solubles may cause problems owing to their tendency to leach out when in contact with water. In some cases it may be desirable to remove the particulate ammonium salts produced from the addition of ammonia before exposure of the flue gas to the ultraviolet light source. The lamp 14 may be of the single $NO_x$ removing type or may be of the dual arrangement providing for sequential removal of $NO_x$ and $SO_2$ and means, such as conventional scrubbers, may be provided between the lamp 14 and the stack 13 for removing acidic species and particulates.

The optimum conditions required for the photolysis reaction for any given flue gas composition and, in particular the duration of the exposure to the ultraviolet radiation and hence the length of ductwork that needs to be irradiated for any given source of ultraviolet radiation, can best be investigated by conducting a computer simulation of the photolysis reaction when conducted with a monochromatic source. Such computer simulation requires the provision of a set of parameters that comprise the input to the computer program. These comprise a set of initial concentrations of all reactive chemical species present in the flue gas, and the extinction coefficients applicable to the wavelength under investigation for the photolysis reactions of all photolysable species present in the gas mixture. For the avoidance of doubt, these extinction coefficients are set out in Table 2 below for certain selected wavelengths. Other coefficients applicable to different wavelengths can be readily obtained from standard texts.

TABLE 2
Photolysis Reactions

| Reaction | Extinction Coeff./1 $mol^{-1}cm^{-1}$ | | |
|---|---|---|---|
| | 184.9 nm | 193 nm | 213.9 nm |
| $NH_3 + hv \rightarrow NH_2 + H$ | 1000 | 1500 | 100 |
| $SO_2 + hv \rightarrow SO + O\ (^3P)$ | 172 | 1000 | 150 |
| $H_2O + hv \rightarrow OH + H$ | 14 | 0 | 0 |
| $O_3 + hv \rightarrow O_2 + O\ ('D)$ | 156 | 100 | 150 |
| $O_2 + hv \rightarrow 20\ (^3P)$ | 4.2 | 0.3 | 0.002 |
| $NO_2 + hv \rightarrow NO + O\ (^3P)$ | 68 | 68 | 100 |
| $N_2O + hv \rightarrow N_2 + O\ ('D)$ | 26 | 35 | <1 |
| $N_2H_4 + hv \rightarrow 2\ NH_2$ | 850 | 1000 | 600 |

Further, the parameters include the intensity of the irradiation, and the rate constants of the significant chemical reactions that occur during the photolysis reaction. As a result of extensive study of the chemistry of the the reaction, 52 chemical reactions have been identified as being significant exclusively, and these are listed in Table 3 along with their respective rate constants.

TABLE 3

| Reactions | Rate constant ($dm^3\ mol^{-1}\ s^{-1}$) |
|---|---|
| 1. $NH_2 + NO = N_2 + H_2O$ | $1.3 \times 10^{10}$ |
| 2. $NH_2 + NO_2 = N_2O + H_2O$ | $1.3 \times 10^{10}$ |
| 3. $NH_2 + NH_2 = N_2H_4$ | $1.5 \times 10^{10}$ |
| 4. $NH_2 + O_2 = O + H_2O$ | $1.2 \times 10^{3}$ |
| 5. $NH_2 + RH = NH_3 + R$ | $5.0 \times 10^{4}$ |
| 6. $NH_2 + H = NH_3$ | $1.0 \times 10^{11}$ |
| 7. $NH_2 + H_2 = NH_3 + H$ | $8.7 \times 10^{2}$ |
| 8. $NH_2 + O = HNO + H$ OR $HO + NH$ | $2.1 \times 10^{9}$ |
| 9. $NH_2 + OH = HNO + H_2$ OR $NH + H_2O$ | $6.0 \times 10^{7}$ |
| 10. $NH_2 + HO_2 = NHO + H_2O$ | $2.0 \times 10^{8}$ |
| 11. $NH_3 + H = NH_2 + H_2$ | $3.0 \times 10^{8}$ |
| 12. $NH_3 + OH = NH_2 + H_2O$ | $1.0 \times 10^{8}$ |
| 13. $NH_3 + O = NH_2 + OH$ | $4.0 \times 10^{5}$ |
| 14. $O + NO_2 = O_2 + NO$ | $5.6 \times 10^{9}$ |
| 15. $O + O_2 = O_3$ | $8.7 \times 10^{6}$ |
| 16. $O + NO = NO_2$ | $9.9 \times 10^{8}$ |
| 17. $NO + O_3 = NO_2 + O_2$ | $1.0 \times 10^{7}$ |
| 18. $O('D) + H_2O = 2\ OH$ | $1.3 \times 10^{11}$ |
| 19. $O('D)\ (+M) = O(^3P)\ (+M)m$ | $8.2 \times 10^{8}\ s^{-1}$ at 1 Atm. |
| 20. $H + O_2 = HO_2$ | $8.0 \times 10^{8}$ |
| 21. $HO_2 + NO = NO_2 + OH$ | $5.0 \times 10^{9}$ |
| 22. $O + SO = SO_2$ | $5.0 \times 10^{7}$ |
| 23. $O_2 + SO = SO_2 + O\ (^3P)$ | $5.0 \times 10^{4}$ |
| 24. $O_3 + SO = SO_2 + O_2$ | $4.5 \times 10^{7}$ |
| 25. $SO + SO = SO_2 + S$ OR $(SO)_2$ | $2.0 \times 10^{6}$ |
| 26. $OH + OH = H_2O + O\ (^3P)$ | $1.1 \times 10^{9}$ |
| 27. $OH + NO_2 = HNO_3$ | $3.8 \times 10^{10}$ |
| 28. $O + O_3 = 20_2$ | $5.7 \times 6$ |
| 29. $OH + CO = CO_2 + H$ | $9.0 \times 10^{7}$ |

| Reactions | Rate constant ($dm^3\ mol^{-1}\ s^{-1}$) |
|---|---|
| 30. $SO + NO_2 = SO_2 + NO$ | $8.5 \times 10^9$ |
| 31. $H + HO_2 = H_2 + O_2$ | $8.4 \times 10^9$ |
| $= 2OH$ | $1.9 \times 10^{10}$ |
| $= H_2O + O$ | $5.7 \times 10^8$ |
| 32. $O + OH = O_2 + H$ | $2.3 \times 10^{10}$ |
| 33. $OH + HO_2 = H_2O + O_2$ | $2.1 \times 10^{10}$ |
| 34. $HO_2 + HO_2 = H_2O_2 + O_2$ | $1.4 \times 10^9$ |
| 35. $O_3 + OH = HO_2 + O_2$ | $4.9 \times 10^7$ |
| 36. $O_3 + HO_2 = OH = O_2$ | $1.2 \times 10^6$ |
| 37. $OH + SO_2 = HSO_3$ | $6.6 \times 10^8$ |
| 38. $H + O_3 = OH + O2$ | $1.7 \times 10^{10}$ |
| 39. $O + H_2O = OH + O_2$ | $1.9 \times 10^{10}$ |
| 40. $O + O = O_2$ | $6.9 \times 10^7$ |
| 41. $O + H = OH$ | $2.98 \times 10^8$ |
| 42. $H_2 + O = OH + H$ | $4.0 \times 10^3$ |
| 43. $SO_2 + O = SO_3$ | $1.1 \times 10^7$ |
| 44. $O + CO = CO_2$ | $3.0 \times 10^4$ |
| 45. $N_2H_4 + H = N_2H_3 + H_2$ | $1.1 \times 10^8$ |
| 46. $OH + H = H_2O$ | $7.2 \times 10^9$ |
| 47. $OH + H_2 = H_2O + H$ | $3.9 \times 10^6$ |
| 48. $SO_2 + HO_2 = SO_3 + OH$ | $5.4 \times 10^5$ |
| 49. $O + NO = N + O_2$ | $7.7 \times 10^4$ |
| 50. $NO + H = NHO$ | $8.3 \times 10^8$ |
| 51. $NO_2 + H = NO + OH$ | $7.5 \times 10^{10}$ |
| 52. Free radical → wall termination | $7.5 \times 10^{-2}$ |

Note 1: many of these reactions are third order at atmospheric pressure. A pseudo-second order rate constant is quoted, and was obtained by substituting one atmosphere pressure for the third body.
2: In practice, wall termination was applied only to $NH_2$ radicals to ensure a conservative result.

Certain of the rate constants and extinction coefficients specified in Tables 2 and 3 are subject to uncertainties owing to conflicting reports in the literature, notably in the extinction coefficients of $NH_3$, $O_2$, $H_2O$, and $SO_2$ and in the rate constants of reactions numbered (1) and (2) in Table 3. The effect of these uncertainties can however be readily checked by varying the input parameters in the computer program and their effect on the resultant rates of NO removal has been found to be very small or negligible.

As will be apparent to those skilled in the art, the set of fifteen rate equations, one for each of the

species $NH_2$, $NH_3$, O, NO, O('D), H, $HO_2$, O, $O_2$, $O_3$, SO, OH, $SO_2$, $N_2H_4$, and (free radical termination) described by the 52 different reactions of Table 3 constitute a stiff system of differential equations, because the rate constants cover a wide range of values. These equations may be integrated numerically using conventional methods e.g. as described in "The automatic integration of ordinary differential equations" Gear C. W., Commun ACM, 14, P176 (1971). It should be noted that computer time can be reduced, and the stability of the solution improved, by using units of micromoles amd microseconds rather than moles and seconds. This results in concentrations and rates whose numerical magnitudes are such that round-off errors are less important than they would be if more conventional units are employed.

As will be appreciated the solutions obtained from the procedure provide the instantaneous concentrations of any selected species at any selected time during the course of the photolysis reaction, and the analysis may be applied to all flue gases obtained from conventional combustion processes including, as mentioned above, the combustion at high temperatures in the presence of air of fuels as diverse as hydrogen gas, fossil fuels and fuels which are derivatives of fossil fuels, which flue gases contain substantial quantities of $SO_2$ and/or $NO_x$, typically $1 \times 10^{-6}$ to $1 \times 10^{-4}$ mol/1 $SO_2$, more typically 1000 to 2000 ppm $SO_2$, $1 \times 10^{-7}$ to $1 \times 10^{-5}$ mol/1 $NO_2$ and $1 \times 10^{-6}$ to $1 \times 10^{-4}$ mol/1 NO.

Usually the concentrations of the species present in such fuel gases will be indicated in Table 4.

TABLE 4

| Species | Concentration Range mol/1 |
|---|---|
| $SO_3$ | 0 to $1 \times 10^{-6}$ |
| $SO_2$ | 0 to $1 \times 10^{-4}$ |
| $NO_2$ | 0 to $1 \times 10^{-5}$ |
| $N_2O$ | 0 to $1 \times 10^{-7}$ |
| NO | 0 to $1 \times 10^{-4}$ |
| HCl | 0 to $1 \times 10^{-5}$ |
| OH | $1 \times 10^{-4}$ to $1 \times 10^{-12}$ |
| $H_2O$ | $1 \times 10^{-4}$ to $1 \times 10^{-2}$ |
| $O_2$ | $1 \times 10^{-4}$ to $1 \times 10^{-2}$ |
| RH (hydrocarbons) | 0 to $1 \times 10^{-6}$ |
| CO | $1 \times 10^{-7}$ to $1 \times 10^{-5}$ |
| $CO_2$ | $1 \times 10^{-4}$ to $1 \times 10^{-2}$ |
| Others (mainly nitrogen) | balance |

Merely by way of example a typical flue gas composition as obtained from a coal-fired power station is given in Table 5 (reactive species only).

TABLE 5

| Species | Concentration |
|---|---|
| $O_2$ | 3½ to 9% by volume (full to part load) |
| $H_2O$ | 10% by volume |
| NO | 300—700 ppm (vol) |
| $SO_2$ | 1100—1600 ppm (vol) |
| HCl | 100 ppm (vol) |
| $SO_3$ | 10—16 ppm (vol) |
| $NO_2$ | 30—70 ppm (vol) |

**Claims**

1. Process for reduction of the content of NO and $NO_2$ in flue gas containing also substantial quantities of $H_2O$ vapor, comprising mixing the flue gas with $NH_3$ and irradiating the mixture with ultraviolet radiation containing at least one component of wavelength in the range from 190 to 220 nm, said radiation being substantially wholly free of any component with a wavelength below 190 nm, and said process taking place in the absence of a solid state catalyst.

2. Process as claimed in claim 1 wherein said radiation is provided from a high pressure mercury-xenon lamp.

3. Process as claimed in claim 1 wherein the gaseous mixture after irradiation is passed direct to the atmosphere.

4. Process as claimed in claim 1 wherein the gaseous mixture is subjected to a total quantity of radiant energy flux of radiation in said wavelength range of from $10^{17}$ to $10^{18}$ photon/$cm^2$ of the irradiated area.

5. Process as claimed in claim 1 wherein said mixture contains $5 \times 10^{-6}$ to $5 \times 10^{-3}$ mol/l $NH_3$.

6. Process as claimed in claim 5 wherein said $NH_3$ content is $1 \times 10^{-5}$ to about $1 \times 10^{-3}$ mol/l.

7. Process as claimed in claim 6 wherein said content is $1 \times 10^{-5}$ to $2 \times 10^{-5}$ mol/l.

8. Process as claimed in claim 1 wherein the $NH_3$ is added to the flue gas when the latter is at a temperature of up to 400°C.

9. Process as claimed in claim 8 wherein said temperature is 150 to 250°C.

10. Process as claimed in claim 1 wherein the mixture containing $NH_3$ is blown through a fan to the site where it is irradiated.

11. Process as claimed in claim 1 in which the gas is a flue gas containing at least $1 \times 10^{-6}$ mol/l $SO_2$.

12. Process as claimed in claim 11 in which the gas contains $1 \times 10^{-6}$ to $1 \times 10^{-4}$ mol/l $SO_2$.

13. Process as claimed in claim 11 in which the gas contains 1000 to 2000 ppm $SO_2$.

14. Process for reacting a flue gas containing at least $1 \times 10^{-6}$ mol/l $SO_2$ to convert said $SO_2$ to an oxidized acidic species, in the absence of a solid state catalyst, said gas containing also substantial quantities of $H_2O$ vapor and $O_2$, comprising irradiating the gas with ulraviolet radiation containing at least a component of wavelength below 190 nm.

15. Process as claimed in claim 14 wherein the radiation contains a component in the range 170 to 190 nm.

16. Process as claimed in claim 14 wherein the content or $SO_2$ in the flue gas is $1 \times 10^{-6}$ to $1 \times 10^{-4}$ mol/l.

17. Process as claimed in claim 14 wherein said radiation is from a low pressure mercury arc lamp providing strong emission lines at 184.9 and 253.7 nm.

18. Process as claimed in claim 14 wherein said gaseous mixture is subjected to a total quantity of radiant energy flux of radiation in said wavelength range of from $5 \times 10^{17}$ to $5 \times 10^{18}$ photon/$cm^2$ of the irradiated area.

19. Process as claimed in claim 14 including contacting the irradiated mixture with an alkaline-reacting medium or water to absorb acid species.

20. Process as claimed in claim 14 including contacting the irradiated mixture with gaseous ammonia to absorb acid species.

21. Process as claimed in claim 1 or 14 wherein said flue gas contains $1 \times 10^{-4}$ to $1 \times 10^{-2}$ mol/l $H_2O$ vapor and $1 \times 10^{-6}$ to $1 \times 10^{-2}$ mol/l $O_2$.

22. Process as claimed in claim 1 or 14 wherein said flue gas contains no more than $1 \times 10^{-8}$ mol/l hydrocarbons.

23. Process for the reduction of the content of $NO_x$ and $SO_2$ in flue gas containing also substantial quantities of $H_2O$ vapor and $O_2$ comprising mixing the flue gas with $NH_3$ and irradiating the mixture with ultraviolet radiation containing at least one component of wavelength in the range 190 to 220 nm, said radiation being substantially wholly free of any component with a wavelength below 190 nm, to obtain a gas with a reduced content of $NO_x$ and irradiating the gas having a reduced content of $NO_x$ with ultraviolet radiation containing at least a component of wavelength below 190 nm to convert $SO_2$ to oxidized acidic species, the process taking place in the absence of a solid state catalyst.

24. Process as claimed in claim 23 wherein the second mentioned irradiation is conducted with radiation containing a component in the range 170 to 190 nm.

25. Process as claimed in claim 23 including contacting the irradiated mixture containing oxidized acidic species with an alkaline reacting medium to absorb said acidic species.

26. Process as claimed in claim 23 including contacting the irradiated mixture containing oxidized acidic species with gaseous ammonia to absorb acid species.

**Patentansprüche**

1. Verfahren zur Verminderung des Gehaltes an NO und $NO_2$ in einem Abgas, das außerdem beträchtliche Mengen an Wasserdampf enthält, wobei man das Abgas mit $NH_3$ vermischt und das Gemisch mit Ultraviolettlicht bestrahlt, das mindestens eine Wellenlängenkomponente im Bereich von 190 bis 220 nm aufweist, wobei die Strahlung praktisch völlig frei von einer Komponente mit einer Wellenlänge

unterhalb 190 nm ist und das Verfahren in Abwesenheit eines Feststoffkatalysators stattfindet.

2. Verfahren gemäß Anspruch 1, bei dem die Strahlung von einer Hochdruckquecksilber/Xenon-Lampe stammt.

3. Verfahren gemäß Anspruch 1, bei dem das gasförmige Gemisch nach der Bestrahlung unmittelbar in die Atmosphäre geleitet wird.

4. Verfahren gemäß Anspruch 1, bei dem das gasförmige Gemisch einer Bestrahlung mit der genannten Wellenlänge in einer Gesamtmenge des Strahlungsenergieflusses von $10^{17}$ bis $10^{18}$ Photonen/$cm^2$ bestrahlte Fläche ausgesetzt wird.

5. Verfahren gemäß Anspruch 1, bei dem das Gemisch $5 \times 10^{-6}$ bis $5 \times 10^{-3}$ Mol/l $NH_3$ enthält.

6. Verfahren gemäß Anspruch 5, bei dem der $NH_3$ Gehalt $1 \times 10^{-5}$ bis $1 \times 10^{-3}$ Mol/l beträgt.

7. Verfahren gemäß Anspruch 6, bei dem der Gehalt $1 \times 10^{-5}$ bis $2 \times 10^{-5}$ Mol/l beträgt.

8. Verfahren gemäß Anspruch 1, bei dem das $NH_3$ dem Abgas zugesetzt wird, wenn das Abgas eine Temperatur von bis zu 400°C aufweist.

9. Verfahren gemäß Anspruch 8, bei dem die Temperatur 150 bis 250°C beträgt.

10. Verfahren gemäß Anspruch 1, bei dem das $NH_3$ enthaltende Gemisch durch ein Gebläse an die Stelle geblasen wird, wo es bestrahlt wird.

11. Verfahren gemäß Anspruch 1, bei dem das Gas ein Abgas ist, das mindestens $1 \times 10^{-6}$ Mol/l $SO_2$ enthält.

12. Verfahren gemäß Anspruch 11, bei dem Gas $1 \times 10^{-6}$ bis $1 \times 10^{-4}$ Mol/l $SO_2$ enthält.

13. Verfahren gemäß Anspruch 11, bei dem das Gas 1000 bis 2000 ppm $SO_2$ enthält.

14. Verfahren zum Umsetzen eines Abgases, das mindestens $1 \times 10^{-6}$ Mol/l $SO_2$ enthält, um das $SO_2$ in Abwesenheit eines Feststoffkatalysators zu einem oxydierten sauren Stoff umzusetzen, wobei das Gas außerdem beträchtliche Mengen Wasserdampf und Sauerstoff enthält, bei dem man das Gas mit Ultraviolettlicht bestrahlt, das mindestens eine Komponente mit einer Wellenlänge unter 190 nm enthält.

15. Verfahren gemäß Anspruch 14, bei dem die Strahlung eine Komponente im Bereich von 170 bis 190 nm enthält.

16. Verfahren gemäß Anspruch 14, bei dem der $SO_2$-Gehalt im Abgas $1 \times 10^{-6}$ bis $1 \times 10^{-4}$ Mol/l beträgt.

17. Verfahren gemäß Anspruch 14, bei dem die Strahlung von einer Quecksilberbogenlampe niedrigen Druckes stammt, die starke Emissionslinien bei 184,9 und 253,7 nm liefert.

18. Verfahren gemäß Anspruch 14, bei dem das gasförmige Gemisch einer Gesamtmenge an Strahlungsenergiefluß in dem genannten Wellenlängenbereich von $5 \times 10^{17}$ bis $5 \times 10^{18}$ Photonen/$cm^2$ bestrahlter Fläche ausgesetzt wird.

19. Verfahren gemäß Anspruch 14, bei dem man außerdem das bestrahlte Gemisch mit einem alkalisch reagierenden Medium oder Wasser zur Absorption von Säurebestandteilen in Berührung bringt.

20. Verfahren gemäß Anspruch 14, bei dem man das bestrahlte Gemisch außeren mit gasförmigen Ammoniak zur Absorption von Säurebestandteilen in Behrührung bringt.

21. Verfahren gemäß Anspruch 1 oder 14, bei dem das Abgas $1 \times 10^{-4}$ bis $1 \times 10^{-2}$ Mol/l Wasserdampf und $1 \times 10^{-6}$ bis $1 \times 10^{-2}$ Mol/l Sauerstoff enthält.

22. Verfahren gemäß Anspruch 1 oder 14, bei dem das Abgas nicht mehr als $1 \times 10^{-8}$ Mol/l Kohlenwasserstoffe enthält.

23. Verfahren zur Verminderung des Gehaltes an $NO_x$ und $SO_2$ in einem Abgas, das außerdem beträchtliche Mengen Wasserdampf und Sauerstoff enthält, wobei man das Abgas mit $NH_3$ vermischt und das Gemisch mit Ultraviolettlicht bestrahlt, das mindestens eine Wellenlängenkomponente im Bereich von 190 bis 220 nm aufweist, wobei die Strahlung praktisch völlig frei von jeglicher Komponente mit einer Wellenlänge unterhalb 190 nm ist, um ein Gas mit einem einem verminderten $NO_x$-Gehalt zu erzielen, und man das Gas mit dem verminderten $NO_x$-Gehalt mit Ultraviolettlicht bestrahlt, das mindestens eine Wellenlängenkomponente unterhalb 190 nm aufweist, um $SO_2$ zu oxidierten, sauren Produkten umzuwandeln, wobei das Verfahren in Abwesenheit eines Feststoffkatalysators stattfindet.

24. Verfahren gemäß Anspruch 23, bei dem die zweite erwähnte Bestrahlung mit Licht durchgeführt wird, das eine Komponente im Bereich von 170 bis 190 nm aufweist.

25. Verfahren gemäß Anspruch 23, bei dem man außerdem das bestrahlte Gemisch, das oxidierte saure Bestandteile enthält, mit einem alkalisch reagierenden Medium in Berührung bringt, um die sauren Bestandteile zu absorbieren.

26. Verfahren gemäß Anspruch 23, bei dem man außerdem das bestrahlte Gemisch, das oxidierte saure Bestandteile enthält, mit gasförmigem Ammoniak in Berührung bringt, um die sauren Bestandteile zu absorbieren.

**Revendications**

1. Procédé pour la reduction de la teneur en NO et en $NO_2$ dans le gaz de fumée contenant également des quantités substantielles de vapeur d'$H_2O$, comprenant l'operation de mélange du gaz de fumée avec du $NH_3$ et l'irradiation de mélange aux rayons ultraviolets contenant au moins un composant de longueur d'ondes dans la plage allant de 190 à 220 nm, ladite irradiation étant de façon substantielle entièrement

exempte de tout composant ayant une longueur d'ondes inférieure à 190 nm, et ledit procédé ayant lieu en l'absence d'un catalyseur à l'état solide.

2. Procédé selon la revendication 1, dans lequel ladite irradiation est fournie par une lampe mercure-xénon à haute pression.

3. Procédé selon la revendication 1, dans lequel le mélange gazeux après irradiation est libéré directement dans l'atmosphére.

4. Procédé selon la revendication 1, dans lequel le mélange gazeux est soumis à une quantité totale de flux d'energie rayonnante d'irradiation comprise dans la gamme de longueur d'ondes allant de $10^{17}$ à $10^{18}$ photons/$cm^2$ de la surface irradiée.

5. Procédé selon la revendication 1, dans lequel le mélange contient $5 \times 10^{-6}$ à $5 \times 10^{-3}$ moles/l de $NH_3$.

6. Procédé selon la revendication 5, dans lequel la teneur en $NH_3$ est de $1 \times 10^{-5}$ à $1 \times 10^{-3}$ moles/l.

7. Procédé selon la revendication 6, dans lequel ladite teneur est de $1 \times 10^{-5}$ à $2 \times 10^{-5}$ moles/l.

8. Procédé selon la revendication 1, dans lequel $HN_3$ est ajouté au gaz de fumée lorsque ce dernier se situe à une température allant jusqua'à 400°C.

9. Procédé selon la revendication 8, dans lequel la température est de 150 à 250°C.

10. Procédé selon la revendication 1, dans lequel le mélange contenant du $NH_3$ est soumis à un soufflage par un ventilateur sur la zone où il est irradié.

11. Procédé selon la revendication 1, dans lequel le gaz est un gaz de fumée contenant au moins $1 \times 10^{-6}$ mol/l de $SO_2$.

12. Procédé selon la revendication 11, dans lequel le gaz contient $1 \times 10^{-6}$ à $1 \times 10^{-4}$ moles/l de $SO_2$.

13. Procédé selon la revendication 11, dans lequel le gaz contient 1000 à 2000 ppm de $SO_2$.

14. Procédé pour faire réagir un gaz de fumée contenant au moins $1 \times 10^{-6}$ moles/l de $SO_2$ afin de convertir le $SO_2$ en une espèce acide oxydée, en l'absence d'un catalyseur à état solide, le gaz contenant également des quantités substantielles d'$O_2$ et de vapeur d'$H_2O$, comprenant l'irradiation du gaz par des rayons ultraviolets contenant au moins un composant de longueur d'ondes au-dessous de 190 nm.

15. Procédé selon la revendication 14, dans lequel les radiations contiennent un composant situé dans la gamme de 170 à 190 nm.

16. Procédé selon la revendication 14, dans lequel la teneur so $SO_2$ dans le gaz de fumée est de $1 \times 10^{-6}$ à $1 \times 10^{-4}$ moles/l.

17. Procédé selon la revendication 14, dans lequel l'irradiation est effectuée à l'aide d'une lampe à arc à mercure à basse pression fournissant des lignes d'émission forte à 184,9 et 253,7 nm.

18. Procédé selon la revendication 14, dans lequel le mélange gazeux est soumis à une quantité totale de flux d'énergie rayonnante dans la gamme de longueur d'ondes allant de $5 \times 10^{17}$ à $5 \times 10^{18}$ photons/$cm^2$ de la zone irradiée.

19. Procédé selon la revendication 14, comprenant la mise en contact du mélange irradié avec un milieu réagissant à l'alcalin ou avec de l'eau pour absorber l'espèce acide.

20. Procédé selon la revendication 14, comprenant la mise en contact du mélange irradié avec de l'ammoniac gazeux pour absorber l'espéce acide.

21. Procédé selon la revendication 1 ou 14, dans lequel le gaz de fumée contient $1 \times 10^{-4}$ à $1 \times 10^{-2}$ moles/l de vapeur d'$H_2O$ et de $1 \times 10^{-6}$ à $1 \times 10^{-2}$ moles/l d'$O_2$.

22. Procédé selon la revendication 1 ou 14, dans lequel ledit gaz de fumée ne contient pas plus du $1 \times 10^{-8}$ moles/l d'hydrocarbures.

23. Procédé pour la réduction de la teneur en $NO_x$ et en $SO_2$ dans le gaz de fumée contenant également des quantités substantielles d'$O_2$ et de vapeur d'$H_2O$ comprenant l'opération de mélange du gaz de fumée avec du $NH_3$ et l'irradiation du mélange aux rayons ultraviolets contenant au moins un composant de longueur d'ondes dans la plage de 190 à 220 nm, ladite irradiation étant de façon substantielle entiérement exempte de tout composant ayant une longueur d'ondes inférieure à 190 nm, pour obtenir un gaz comportant une teneur réduite en $NO_x$ et l'irradiation du gaz ayant une teneur réduite en $NO_x$ par des rayons ultraviolets contenant au moins un composant de longueur d'ondes inférieure à 190 nm pour convertir le $SO_2$ en l'espèce acide oxydée, le procédé ayant lieu en l'absence d'un catalyseur à l'état solide.

24. Procédé selon la revendication 23, dans lequel l'irradiation mentionnée en second lieu est réalisée avec des rayons contenant un composant dans la gamme de 170 à 190 nm.

25. Procédé selon la revendication 23, comprenant la mise en contact du mélange irradié contenant l'espèce acide oxydee avec un milieu réagissant à l'alcalin pour absorber l'espèce acide.

26. Procédé selon la revendication 23, comprenant l'opération de mise en contact du mélange irradié contenant l'espèce acide oxydée avec de l'ammoniac gazeux absorber l'espèce acide.

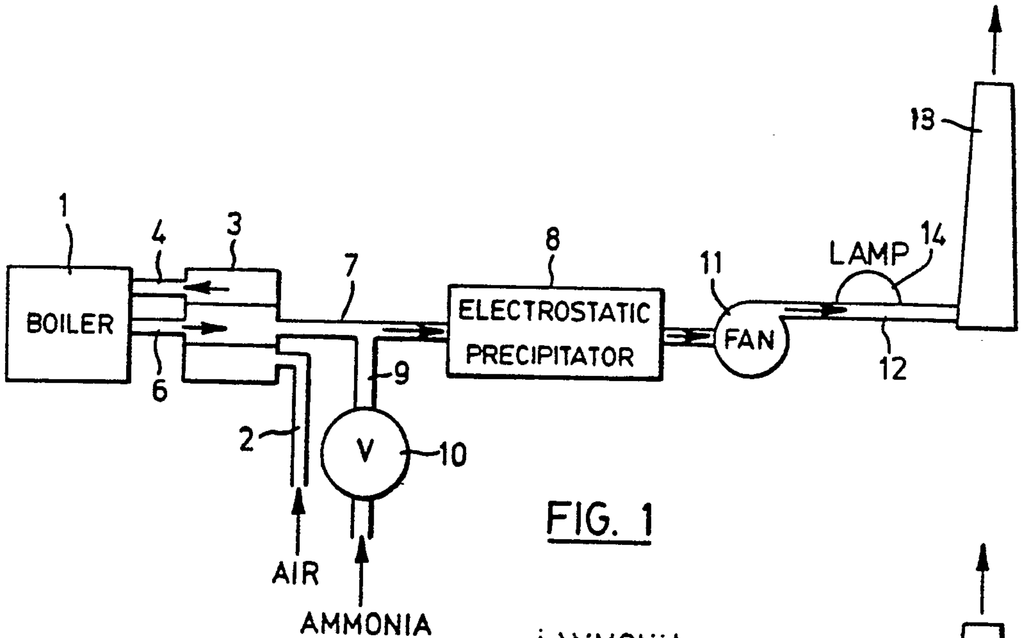


FIG. 1

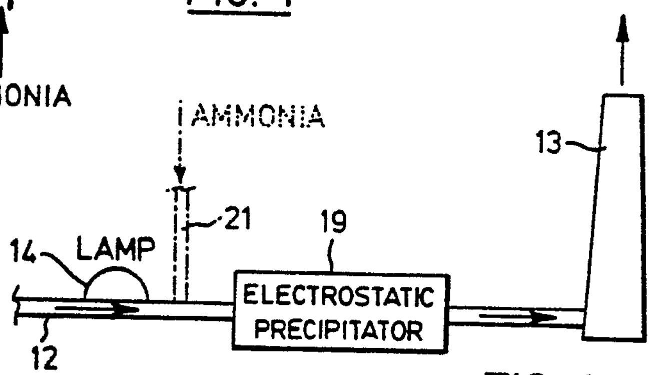


FIG. 1a

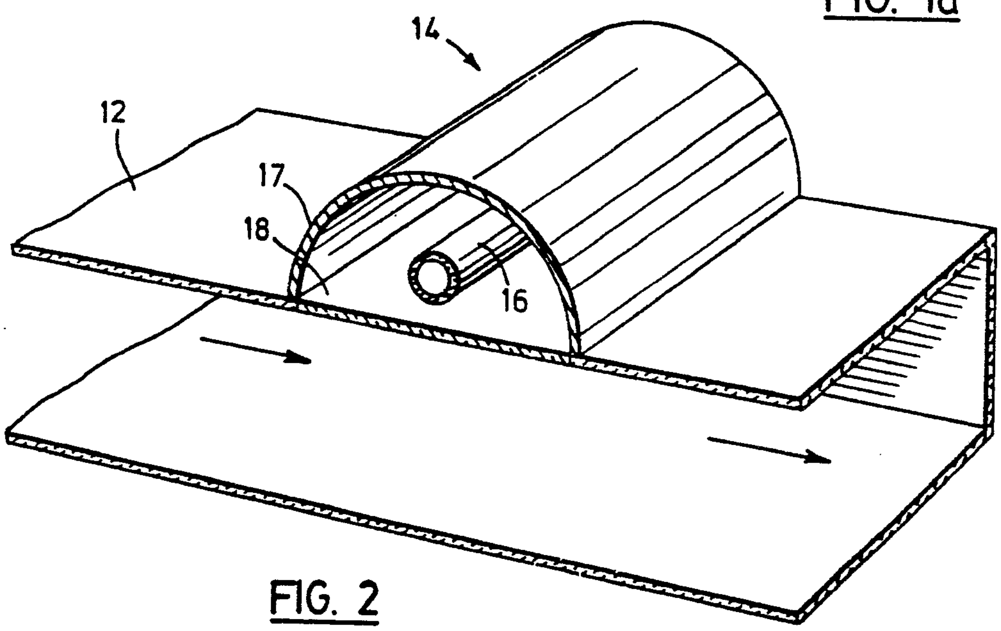


FIG. 2

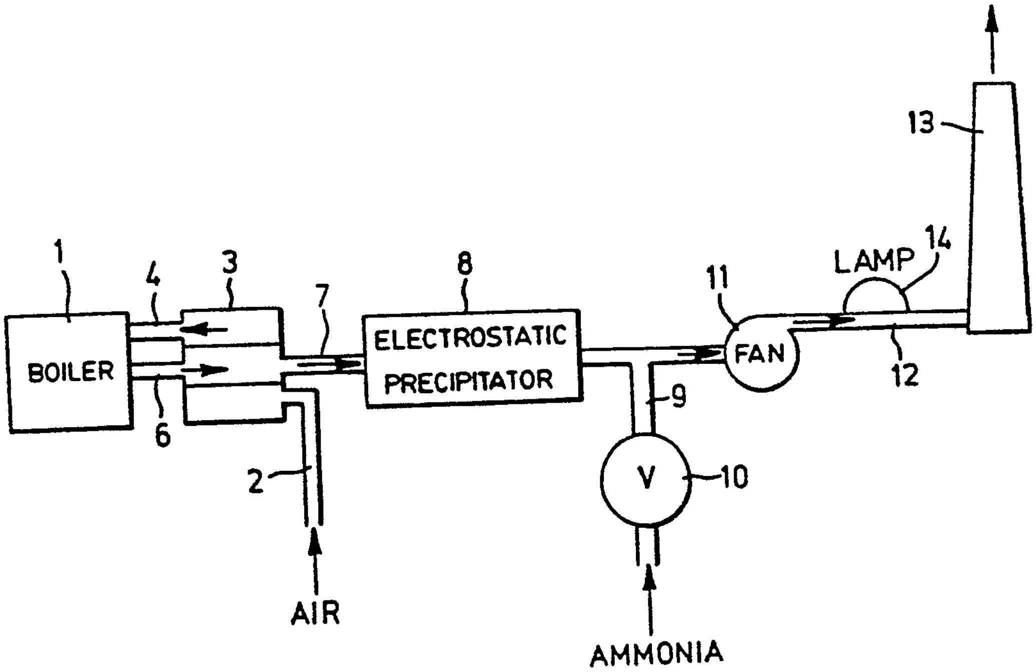
1
4
3
7
8
11
LAMP
14
13
12
BOILER
ELECTROSTATIC PRECIPITATOR
FAN
6
2
9
V
10
AIR
AMMONIA

FIG. 3